# EUROPÄISCHE PATENTANMELDUNG

(11) **EP 1 251 673 A1**
(43) Veröffentlichungstag der Anmeldung: **23.10.2002**
(21) Anmeldenummer: 01710023.1
(22) Anmeldetag: 20.04.2001
(51) Int. Cl.: H04M 1/02, G06F 1/16

(54) **Unterhaltungselektronischer Apparat und elektrische Betätigungsanordnung hierfür**

(71) Anmelder: E-Trade Int'l Group Limited, Shatin, N.T., Hong Kong (CN)
(72) Erfinder: Chan, Chung Philip, Hong Kong (CN)
(74) Vertreter: Reimold, Otto, Dr. Dipl.-Phys.

(57) **Zusammenfassung**

Die Erfindung betrifft einen unterhaltungselektronischen Apparat, insbesondere einen Radio-Empfänger, mit einer elektrischen Betätigungsanordnung (11) zum elektrischen Betätigen des Apparates (10) durch eine Bedienperson sowie eine Betätigungsanordnung (11) hierfür. Es wird vorgeschlagen, dass die Betätigungsanordnung (11) ein aus dem Apparat (10) ausziehbares und in den Apparat (10) einziehbares Zugelement (12) enthält, wobei der unterhaltungselektronische Apparat (10) beim Ausziehen des Zugelementes (12) und/oder beim Einziehen des Zugelementes (12) betätigt wird.

## Beschreibung

Die Erfindung betrifft einen unterhaltungselektronischen Apparat, insbesondere einen Radio-Empfänger, mit einer elektrischen Betätigungsanordnung zum elektrischen Betätigen des Apparates durch eine Bedienperson. Die Erfindung betrifft ferner eine elektrische Betätigungsanordnung hierfür.

Unterhaltungselektronische Apparate, beispielsweise Radio-Empfänger, tragbare Kassetten- oder CD-Spieler oder dergleichen, werden im Allgemeinen durch Druckschalter, Drehschalter oder Schiebeschalter betätigt. Bei einem Druckschalter kann beispielsweise vorgesehen sein, dass bei jedem Drücken des Schalters der jeweilige Apparat ein- bzw. ausgeschaltet wird. Zur Auswahl einer Empfangsfrequenz eines Radio-Empfängers eignen sich insbesondere Drehschalter oder Schaltwippen. Die Auswahl der jeweiligen Schalter für einen Apparat hängt unter anderem vom jeweiligen Bedienkonzept und von ästhetischen Gesichtspunkten ab. Außerdem kommt es häufig darauf an, dass die Apparate möglichst kompakt bauend sind. Für manche Einsatzgebiete erweist sich dies jedoch als Nachteil. Beispielsweise können an einem kompakt gebauten Radio-Empfänger bzw. an dessen Schalter nur wenige und jedenfalls nur knappe Hinweis-, Informations- oder Werbebotschaften angeordnet sein. Ferner sind die elektrischen Betätigungselemente zumeist sehr stark miniaturisiert, was deren Bedienbarkeit erheblich einschränkt.

Es ist daher Aufgabe der Erfindung, für einen unterhaltungselektronischen Apparat der eingangs genannten Art sowie für eine elektrische Betätigungsanordnung hierfür ein optimiertes Bedienkonzept zu schaffen, wobei insbesondere Platz für Informations- oder Werbebotschaften bereitgestellt werden soll.

Diese Aufgabe wird gelöst durch einen unterhaltungselektronischen Apparat, bei dem vorgesehen ist, dass die Betätigungsanordnung ein aus dem Apparat ausziehbares und in den Apparat einziehbares Zugelement enthält, wobei der unterhaltungselektronische Apparat beim Ausziehen des Zugelementes und/oder beim Einziehen des Zugelementes betätigt wird.

Bei der Betätigungsanordnung kann es sich beispielsweise um einen Ein- und Ausschalter für den Apparat handeln, dessen Bedienkonzept für die Bedienperson ohne Weiteres erkennbar ist. Die Bedienperson muss nicht erst umständlich eine Beschriftung lesen, um die Funktion der Betätigungsanordnung zu erfassen, wie es beispielsweise bei einer Anordnung gleichartig aussehender Druckschalter der Fall ist, sondern erkennt bereits am Funktionsprinzip der Betätigungsanordnung, dem Ausziehen bzw. Einziehen des Zugelementes, für welchen Zweck die Betätigungsanordnung vorgesehen ist. Zudem eröffnet das aus- bzw. einziehbare Zugelement gestalterische Spielräume. Bereits das Zugelement als solches kann beispielsweise durch eine eigenartige Farbgebung zum individuellen Aussehen des jeweiligen Apparates beitragen. Es können aber auch Werbebotschaften, Funktionshinweise oder dergleichen auf dem Zugelement angebracht sein. Jedenfalls erkennt man bereits am aus- bzw. eingezogenen Zugelement, in welchem elektrischen Zustand sich der jeweils damit ausgestattete unterhaltungselektronische Apparat befindet. Beispielsweise kann ein ausgezogenes Zugelement signalisieren, dass der Apparat eingeschaltet ist. Ist das Zugelement eingezogen, ist der Apparat ausgeschaltet.

Vorteilhafte Ausgestaltungen der Erfindung ergeben sich aus den abhängigen Ansprüchen sowie aus der Beschreibung.

Zweckmäßigerweise ist vorgesehen, dass die Betätigungsanordnung zumindest einen elektrischen Schalter enthält, der beim Ausziehen bzw. Einziehen des Zugelementes betätigt wird. Es ist jedoch auch denkbar, dass die Betätigungsanordnung beispielsweise ein Potentiometer enthält, das durch Ein- bzw. Ausziehen des Zugelementes betätigt wird und an dessen Ausgang in Abhängigkeit von der jeweiligen Zugstellung des Zugelements unterschiedliche Widerstandswerte abgreifbar sind.

Vorteilhaft ist vorgesehen, dass das Zugelement eine aufwickelbare, vorzugsweise beschriftbare und/oder bedruckbare, Bahn enthält. Auf einer solchen Bahn können beispielsweise Werbebotschaften, Bedienhinweise, Grafiken oder dergleichen angebracht sein.

Zum Aufwickeln der Bahn ist vorteilhaft vorgesehen, dass die Betätigungsanordnung eine hierfür geeignete Aufwickelanordnung enthält. Die Aufwickelanordnung kann beispielsweise eine Rolle oder Walze enthalten. Prinzipiell ist es aber auch denkbar, dass die Bahn in einen im Innern des Apparates und/oder im Innern der Betätigungsanordnung vorgesehenen Aufnahmeraum eingezogen wird.

Die Aufwickelanordnung ist vorzugsweise durch eine Arretiervorrichtung in abgewickeltem und/oder aufgewickeltem Zustand der Bahn arretierbar, so dass die Bahn nicht unabsichtlich auf- bzw. abgewickelt wird. Die Arretiervorrichtung wird beispielsweise durch einen Bolzen, eine Raste oder dergleichen gebildet, die mit der Aufwickelanordnung in ab- bzw. aufgewickeltem Zustand der Bahn in Eingriff steht.

Zweckmäßigerweise enthält die Aufwickelanordnung eine Rückstellvorrichtung zum selbsttätigen Aufwickeln der Bahn. Die Rückstellvorrichtung kann beispielsweise durch eine Federanordnung gebildet werden, die beim Abwickeln der Bahn gespannt wird. Beim Entspannen nimmt die Federanordnung die Aufwickelanordnung mit und versetzt sie in eine Aufwickelbewegung, so dass diese die Bahn wieder aufwickelt. Die Federanordnung kann beispielsweise eine oder mehrere Schraubenfedern oder Spiralfedern enthalten. Es ist jedoch auch denkbar, dass das Aufwickeln der Bahn durch eine Bedienhandlung der Bedienperson bewirkt wird. Beispielsweise könnte eine Aufwickelkurbel oder ein Drehknauf an der Aufwickelanordnung zum Aufwickeln der Bahn vorgesehen sein.

In einer besonders bevorzugten Variante der Erfindung ist vorgesehen, dass der Schalter zumindest eine an der Aufwickelanordnung angeordnete elektrische Kontaktfläche und einen mit dieser zusammenwirkenden elektrischen Kontakt enthält, wobei die mindestens eine Kontaktfläche von dem Kontakt durch die Bahn elektrisch isoliert wird, wenn diese zumindest teilweise aufgewickelt ist. Die Bahn erfüllt hierbei nicht nur die Funktion eines gestalterischen und leicht bedienbaren Elementes, sondern dient zudem zur elektrischen Trennung des Schalters. Beispielsweise kann der Schalter erst dann in elektrisch leitender Schließstellung sein, wenn die Bahn vollständig abgewickelt ist. Ein mit einer derartigen Betätigungsanordnung ausgestatteter Radio-Empfänger ist dann zum Beispiel eingeschaltet.

An der Bahn ist vorzugsweise eine Spannleiste angeordnet, die die Bahn entlang zumindest einer Richtung aufspannt. Die Leiste ist beispielsweise an dem der Aufwickelanordnung entgegengesetzten freien Ende der Bahn angeordnet und erstreckt sich quer zur Aufwickelrichtung der Bahn über diese hinweg. Jedenfalls hält sie die Bahn aufgespannt, so dass gegebenenfalls auf dieser angeordnete Werbebotschaften und/oder sonstige optische Gestaltungselemente gut sichtbar sind.

Zweckmäßigerweise bildet zumindest ein Abschnitt der Spannleiste einen Handgriff, mit dem das Zugelement, im konkreten Fall die Bahn, aus dem unterhaltungselektronischen Apparat ausziehbar ist. Prinzipiell kann an dem Zugelement jedoch auch ein separater Handgriff angeordnet sein.

Zweckmäßigerweise ist vorgesehen, dass an der Spannleiste ein Anschlag angeordnet ist, der sich bei aufgewickelter Bahn am Gehäuse des unterhaltungselektronischen Apparates abstützt. Somit wird verhindert, dass die Bahn sozusagen vollständig im Gehäuse des Apparates verschwindet, wenn sie aufgewickelt wird.

Vorzugsweise ist im Innern der Aufwickelanordnung eine elektrische Stromversorgung für den unterhaltungselektronischen Apparat angeordnet. Dies kann beispielsweise ein Batteriefach sein. Diese Variante ist insbesondere dann vorteilhaft, wenn die Aufwickelanordnung walzenförmig ausgestaltet ist, wobei dann im Innern der Walze beispielsweise in deren Achsrichtung hintereinanderliegende Batterien angeordnet sein können.

Bei einer besonders bevorzugten Variante der Erfindung ist vorgesehen, dass der unterhaltungselektronische Apparat ein im Wesentlichen zylindrisches Gehäuse aufweist und dass das Zugelement den Gehäusemantel durchgreift. Bei dieser Bauform kann die bereits erwähnte Bahn sich über nahezu die gesamte Länge des Zylinders erstrecken und somit eine große, bedruckbare und/oder beschriftbare Fläche für Werbeelemente und dergleichen bereitstellen.

Vorteilhaft ist vorgesehen, dass die Betätigungsanordnung zumindest einen elektrischen Generator enthält, der durch das Ausziehen und/oder das Einziehen des Zugelementes betätigt wird, wobei der Generator elektrische Energie für den unterhaltungselektronischen Apparat erzeugt. Der Apparat kann somit umweltfreundlich und kostengünstig betrieben werden, da eine separate Batterie nicht unbedingt erforderlich ist.

Nachfolgend wird die Erfindung anhand eines Ausführungsbeispiels unter Zuhilfenahme der Zeichnung erläutert.

Es zeigen:
- Fig. 1: einen teilweise aufgeschnittenen Radio-Empfänger 10 mit einem Zugschalter 11, dessen Zugelement 12 ausgezogen ist, und
- Fig. 2: eine Detailansicht des Radio-Empfängers 10 aus Fig. 1, wobei durch einen partiellen Schnitt eine Rückstellvorrichtung 13 einer Aufwickelanordnung 14 sichtbar wird, die zum Aufwickeln des Zugelementes 12 vorgesehen ist.

Im Ausführungsbeispiel ist als unterhaltungselektronischer Apparat ein Radio-Empfänger 10 gezeigt, der über einen Zugschalter 11 ein- und ausgeschaltet werden kann. Der Zugschalter 11 bildet eine elektrische Betätigungsanordnung mit einem aus dem Radio-Empfänger 10 ausziehbaren und in diesen wieder einziehbaren Zugelement 12, wobei beim Ausziehen des Zugelementes 12 der Radio-Empfänger 10 beispielsweise eingeschaltet wird und beim Wiedereinziehen des Zugelementes in den Radio-Empfänger 10 dieser wieder ausgeschaltet wird. Der Zugschalter 11 enthält eine Aufwickelanordnung 14, auf die das Zugelement beim Einziehen in den Radio-Empfänger 10 aufgewickelt wird. Das Zugelement 12 enthält eine aufwickelbare und dementsprechend flexible Bahn 15, die beispielsweise mit einem Werbeaufdruck, einer Grafik und/oder einem Bedienhinweis beschriftet oder bedruckt ist. Die Bahn 15 kann beispielsweise aus Kunststoff, Textilmaterial oder reißfestem Papier bestehen. Ferner eignen sich Verbundwerkstoffe, beispielsweise kunststoffbeschichtetes Textilmaterial oder dergleichen.

Die Aufwickelanordnung 14 enthält eine Walze 16, die im Innern des Radio-Empfängers 10 drehbeweglich angeordnet ist. An der Walze 16 ist die Bahn 15 beispielsweise durch eine Klebverbindung und/oder durch eine in der Zeichnung nicht dargestellte Halteleiste befestigt.

Der Radio-Empfänger 10 weist ein Gehäuse 17 mit vorliegend im Wesentlichen kreis-zylindrischer Gestalt auf, dessen Gehäusemantel vom Zugelement 12 an einem in der Zeichnung nicht sichtbaren Schlitz durchgriffen wird. Prinzipiell sind jedoch auch beliebige sonstige geometrische Ausgestaltungen des Gehäuses 17 denkbar. Der Zylindermantel des Gehäuses 17 wird im Wesentlichen durch im Ausführungsbeispiel halbschalenartig ausgestaltete und miteinander verbundene Gehäuseteile 18, 19 gebildet. An der unteren Stirnseite des Gehäuses 17, ist ein beispielsweise als Verschlusskappe ausgestaltetes Verschlusselement 20 angeordnet. Oben ist auf die Gehäuseteile 18, 19 ein Verschlussstück 21 aufgesetzt, das seitlich die zylindrische Außengestalt der Gehäuseteile 18, 19 nach oben hin fortsetzt und stirnseitig einen Lautsprecher 22 sowie ein diesen gegen Umwelteinwirkungen schützendes Ziergitter 23 enthält. Der Lautsprecher 22 und das Ziergitter 23 sind beispielsweise schräg am Verschlussstück 21 angeordnet, das heißt, dass das Gehäuse 17 zwei zueinander nicht parallele Stirnseiten aufweist. Es wären jedoch prinzipiell auch zueinander parallele Stirnseiten möglich. Jedenfalls wird durch die schräge Anordnung des Lautsprechers 22 eine optimierte Schallabstrahlung sowie ein ansprechendes Äußeres des Radio-Empfängers 10 erzielt.

Der Lautsprecher 22 wird durch eine Empfängerbaugruppe 24 mit Lautsprechersignalen über Kabel 25 versorgt. Die Empfängerbaugruppe 24 enthält eine Platine 26, die sich längs des Gehäuseteils 18 erstreckt und von diesem gehalten wird. Elektronische Komponenten, beispielsweise integrierte Schaltkreise, Transistoren, Kondensatoren oder dergleichen, der Empfängerbaugruppe 24 sind aus Gründen der Vereinfachung in der Zeichnung nicht dargestellt. Ferner sind am Gehäuseteil 18 Bedienelemente 27 angeordnet, die dieses durchgreifen und mit der Empfängerbaugruppe 24 verbunden sind. Die Bedienelemente 27 enthalten beispielsweise Druck- oder Drehschalter, die zur Lautstärkeverstellung, Frequenzwahl oder dergleichen vorgesehen sind.

Die Empfängerbaugruppe 24 wird durch eine im Innern der Aufwickelanordnung 14, konkret im Innern der Walze 16, angeordnete Stromversorgungseinrichtung 28 mit Strom versorgt. Die Stromversorgungseinrichtung 28 kann beispielsweise eine Batterieanordnung 29 mit einer oder mehreren Batterien und/oder einen elektrischen Generator enthalten. Die Stromversorgungseinrichtung 28 ist mit der Empfängerbaugruppe 24 eine elektrische Verbindung 30 elektrisch verbunden. Hierfür ist beispielsweise ein Kabel und/oder das Verschlusselement 20 bzw. ein an dieser angeordneter Verschlussdeckel 31 zum Verschließen der Stromversorgungseinrichtung 28 vorgesehen.

Eine weitere elektrische Verbindung zwischen der Stromversorgungseinrichtung 28 und der Empfängerbaugruppe 24 ist durch einen Kontakt-Schalter 32 herstellbar, der durch Betätigung des Zugelementes 12 betätigbar ist. Der Schalter 32 enthält eine an der Walze 16 angeordnete Kontaktfläche 33, die in nicht dargestellter Weise mit der Stromversorgungseinrichtung 28 verbunden ist, sowie einen mit der Kontaktfläche 33 zusammenwirkenden elektrischen Kontakt 34. Die Kontaktfläche 33 ist beispielsweise am Außenumfang der Walze 16 angeordnet und wird beispielsweise durch ein elektrisch leitendes Metallband oder einen Metallring gebildet. Abweichend von der gezeigten Ausführungsform könnten auch mehrere elektrische Kontaktflächen an der Aufwickelanordnung 14 angeordnet sein. Der Kontakt 34 ist an der Empfängerbaugruppe 24 angeordnet und beispielsweise als ein auf der Kontaktfläche 33 schleifender Schleif-Kontakt ausgebildet. Kontaktzungen 35 des Kontaktes 34 werden durch Federkraft an die Kontaktfläche 33 angepresst. Die Kontaktzungen 35 werden beispielsweise durch Enden einer Schraubenfeder 36 gebildet, die einen Bolzen 37 umschließt, der durch eine an der Platine 26 angeordnete Halterung 38 gehalten wird. Der Kontakt 34 könnte prinzipiell auch an der Aufwickelanordnung 14 oder einem sonstigen Teil des Zugschalters 11 angeordnet sein.

Wenn die Bahn 15 auf die Walze 16 aufgewickelt wird, überdeckt sie die Kontaktfläche 33, so dass die Kontaktzungen 35 elektrisch von der Kontaktfläche 33 isoliert sind. Die Empfängerbaugruppe 24 wird dann nicht mehr mit elektrischem Strom versorgt und der Radio-Empfänger 10 mithin ausgeschaltet. Wenn eine Bedienperson an dem Zugelement 12 zieht, somit also die Bahn 15 von der Walze 16 abgewickelt wird, wird die Kontaktfläche 33 spätestens beim vollständigen Abwickeln der Bahn 15 von der Walze 16 freigelegt, so dass der Kontakt 34 mit der Kontaktfläche 33 elektrisch verbunden wird und mithin der Radio-Empfänger 10 eingeschaltet wird.

Eine Drehwelle 40 der Walze 16 erstreckt sich beispielsweise zwischen dem Verschlusselement 20 und dem diesem gegenüberliegenden Verschlussstück 21, im Ausführungsbeispiel parallel zur Zylinder-Längsachse 39 des Gehäuses 17. Die Bahn 15 kann somit nahezu genauso hoch sein wie das Gehäuse 17, so dass die Bahn 15 letztlich eine verhältnismäßig große beschriftbare und/oder bedruckbare Fläche bereitstellen kann. Die Drehwelle 40 wird durch Halterungen 41 drehbeweglich gehalten, wobei aus Gründen der Veranschaulichung lediglich die beim oberen Verschlussstück 21 angeordnete Halterung 41 gezeigt ist. Die Halterungen 41 sind beispielsweise an den Gehäuseteilen 18, 19 und/oder der Platine 26 drehfest angeordnet. Die gezeigte Halterung 41 besteht aus einem von der Drehwelle 40 durchstoßenen Querträger, der sich quer zur Zylinder-Längsachse 39 zwischen den Gehäuseteilen 18, 19 erstreckt.

Am oberen, dem Verschlussstück 21 benachbarten Ende der Walze 16 ist eine Arretiervorrichtung 42 angeordnet, mit der die Walze 16 im abgewickelten Zustand der Bahn 15 arretierbar ist. Die Arretiervorrichtung 42 enthält am oberen Ende der Walze 16 angeordnete Ausnehmungen 43, in welche ein sich quer zur Drehwelle 40 erstreckender Sperrstift 44 eingreift oder einrastet. Die Ausnehmungen 43 sind beispielsweise so ausgeformt, dass der Sperrstift 44 bei einer Abwickelbewegung der Walze 16 aus den Ausnehmungen 43 heraus verdrängt wird. Somit ist ein Abwickeln der Bahn 15 möglich, ohne dass der Sperrstift 44 manuell betätigt wird.

Der Sperrstift 44 ist an einem Schenkel einer am Gehäuseteil 18 schwenk- oder kippbar angeordneten Wippe 45 angeordnet, die durch einen Drucktaster 46 betätigbar ist. Beim Drücken des Drucktasters 46 wird der Sperrstift 44 aus den Ausnehmungen 43 herausbewegt. Beim Loslassen des Drucktasters 46 greift der Sperrstift 44 in die Ausnehmungen 43 durch Krafteinwirkung einer Federanordnung 47 in die Ausnehmungen 43 ein und wird durch die Federanordnung 47 mithin in Arretierstellung gehalten.

Durch Drücken des Drucktasters 46 wird die Arretiervorrichtung 42 entsperrt, wobei die Bahn 15 durch die Rückstellvorrichtung 13 auf die Walze 16 aufgewickelt wird. Hierfür enthält die Rückstellvorrichtung 13 eine Rückstell-Federanordnung 48, die beispielsweise eine Schraubenfeder enthält, die einenends drehfest mit der Walze 16 und andernends drehfest mit dem Gehäuse 17 verbunden ist. Prinzipiell kann die Rückstellvorrichtung 13 auch mehrere Federn und/oder einen motorischen Rückstell-Antrieb enthalten. Die Rückstell-Federanordnung 48 wird durch Abwickeln der Bahn 15 gespannt. Nach Entriegeln der Arretiervorrichtung 42 entspannt sich die Federanordnung 48 wieder, wobei sie die Walze 16 in Aufwickelrichtung dreht.

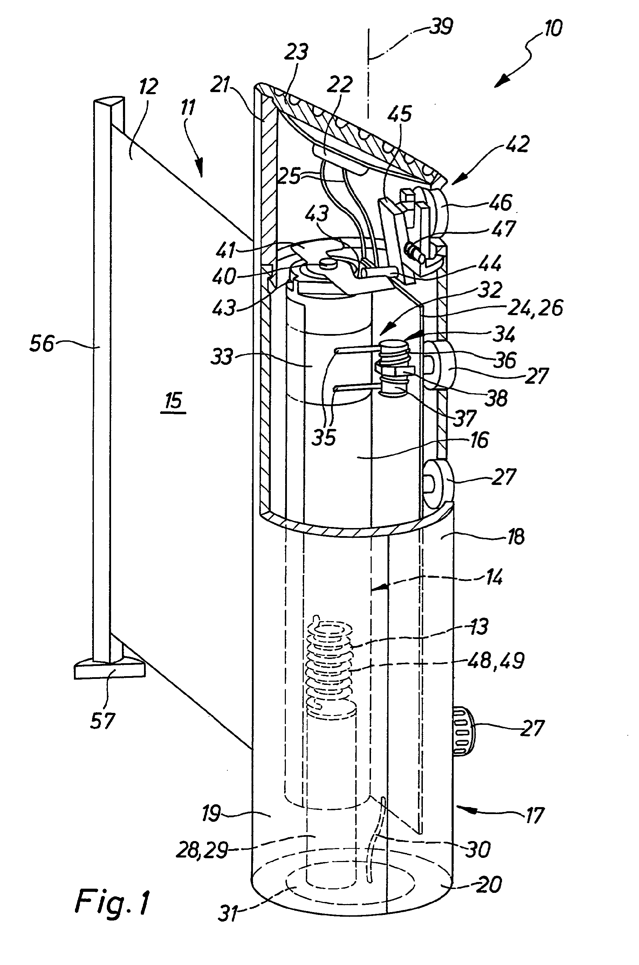

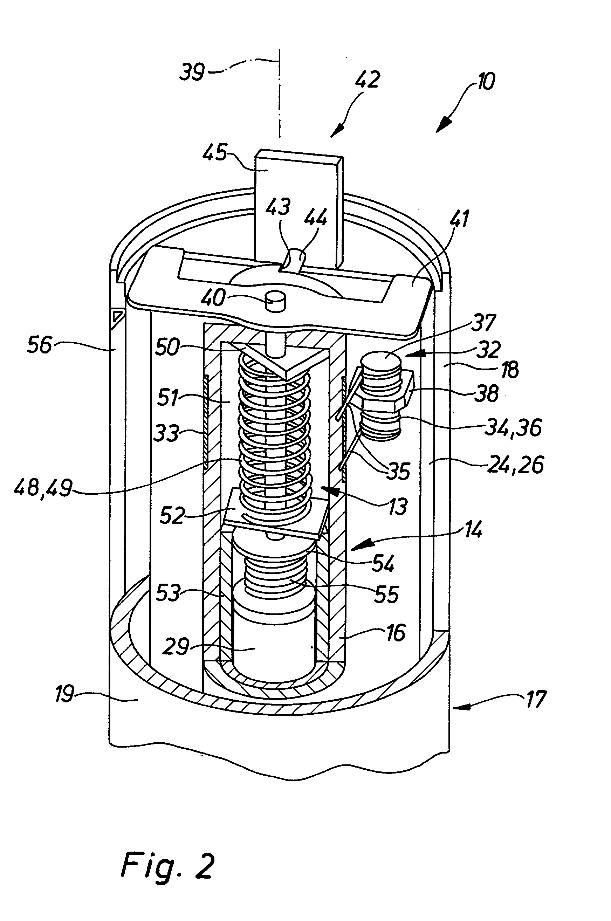

Fig. 2 zeigt die in Fig. 1 lediglich schematisch gezeichnete Federanordnung 48 sowie weitere, im Innern der Walze 16 angeordnete Komponenten detaillierter:

Die Federanordnung 48 enthält eine Schraubenfeder 49, die oben im Innern der Walze 16 angeordnet ist. Oben ist an der Feder 49 ein Endstück 50 angebracht, das sich relativ zur Walze 16 drehfest in deren Innenraum 51 abstützt. Unten ist an der Feder 49 ein Endstück 52 angeordnet, das drehfest an einem Gehäuse 53 der Stromversorgungseinrichtung 28 befestigt ist. Das Gehäuse 53 wird im Ausführungsbeispiel durch ein in der Walze 16 angeordnetes, beispielsweise in diese eingeschobenes und relativ zum Gehäuse 17 drehfestes Zylinder-Rohr gebildet. Im Ausführungsbeispiel ist die Walze auf dem Gehäuse 53 drehbeweglich gelagert, so dass dieses mithin die Funktion einer Drehwelle für die Walze 16 übernimmt.

Die Feder 49 sowie deren Endstücke 50, 52 werden von der Drehwelle 40 drehbeweglich durchdrungen. An dem der Halterung 41 gegenüberliegenden Ende der Drehwelle 40, benachbart zum Endstück 52 ist ein Kontaktstück 54 mit einer Feder 55 zum elektrischen Kontaktieren der Batterieanordnung 29 angeordnet. Die Feder 55 stützt sich beispielsweise auf dem elektrischen Minus-Pol der Batterieanordnung 29 ab.

Am aus dem Radio-Empfänger 10 ausziehbaren, der Aufwickelanordnung 14 entgegengesetzten freien Ende der Bahn 15 ist eine Spannleiste 56 angeordnet, die die Bahn 15 in Drehachsrichtung der Aufwickelanordnung 14 aufspannt. Die Spannleiste 56 könnte sich zwar prinzipiell nur über einen Abschnitt der Bahn 15 erstrecken. Beim Ausführungsbeispiel erstreckt sie sich jedoch oben und unten über die Bahn 15 hinaus. Zudem bildet die Spannleiste 56 einen Handgriff zum Ausziehen der Bahn 15 aus dem Gehäuse 17. Die Spannleiste 56 und/oder ein an dieser angeordnetes Anschlagstück, beispielsweise ein unten an der Spannleiste 56 angeordnetes Anschlagstück 57, stützen sich bei aufgewickelter Bahn 15 am Gehäuse 17 ab, so dass die Bahn 15 nicht vollständig in das Gehäuse 17 eingezogen und von der Aufwickelanordnung 14 aufgewickelt werden kann.

Die Spannleiste 56 ist beispielsweise außenseitig abgerundet, so dass sie bei aufgewickelter Bahn 15 eine durchgehende Kontur mit dem Gehäuse 17 bilden kann. Am Gehäuse 17 können nicht dargestellte Ausnehmungen angeordnet sein, die sich beispielsweise bei am Gehäuse 17 anliegender Spannleiste 56 oben und/oder unten und/oder seitlich von dieser befinden und zum bequemen Greifen der Spannleiste 56 dienen.

Beliebige Kombinationen der in den Ansprüchen sowie in der Beschreibung angegebenen Maßnahmen sind ohne Weiteres möglich. Ferner sind weitere Varianten der Erfindung möglich, von denen nachfolgend einige wenige exemplarisch erläutert werden:

Beispielsweise könnte die Stromversorgungseinrichtung 28 anstatt der Batterieanordnung 29 einen elektrischen Generator enthalten, der bei Drehen der Walze 16 in Ab- und/oder Aufwickelrichtung betätigt wird und für die Empfängerbaugruppe 24 elektrische Energie erzeugt.

Es könnten neben dem Zugschalter 11 weitere erfindungsgemäße Betätigungsanordnungen vorgesehen sein. Beispielsweise könnte die Empfangsfrequenz der Empfängerbaugruppe 24 durch ein erfindungsgemäß ausgestaltetes Zugelement verstellbar sein.

Statt der Empfängerbaugruppe 24 könnte ein Wiedergabegerät für Werbe-, Gruß- oder sonstige Sprach- und/oder Musikbotschaften vorgesehen sein. Ferner könnte auch ein Wiedergabegerät für Bild-/Ton-Träger, beispielsweise Compact Discs oder elektronische Speicherbausteine, vorgesehen sein.

Die gezeigte Bauform des Schalters 32 ist lediglich eine bevorzugte Bauform. Andere Bauformen sind ebenfalls denkbar. Beispielsweise könnte ein durch die Walze 16 betätigter Druck-, Dreh- oder sonstiger Schalter vorgesehen sein. Ferner könnten auch die Ausnehmungen 43 sowie der Sperrstift 44 als elektrische Kontakte ausgebildet sein.

## Patentansprüche

1. Unterhaltungselektronischer Apparat, insbesondere Radio-Empfänger, mit einer elektrischen Betätigungsanordnung (11) zum elektrischen Betätigen des Apparates (10) durch eine Bedienperson, **dadurch gekennzeichnet, dass** die Betätigungsanordnung (11) ein aus dem Apparat (10) ausziehbares und in den Apparat (10) einziehbares Zugelement (12) enthält, wobei der unterhaltungselektronische Apparat (10) beim Ausziehen des Zugelementes (12) und/oder beim Einziehen des Zugelementes (12) betätigt wird.

2. Unterhaltungselektronischer Apparat nach Anspruch 1, **dadurch gekennzeichnet, dass** die Betätigungsanordnung (11) zumindest einen elektrischen Schalter (32) enthält, der beim Ausziehen bzw. Einziehen des Zugelementes (12) betätigt wird.

3. Unterhaltungselektronischer Apparat nach Anspruch 1 oder 2, **dadurch gekennzeichnet, dass** das Zugelement (12) eine aufwickelbare, vorzugsweise beschriftbare und/oder bedruckbare, Bahn (15) enthält.

4. Unterhaltungselektronischer Apparat nach Anspruch 3, **dadurch gekennzeichnet, dass** die Betätigungsanordnung (11) eine Aufwickelanordnung (14) zum Aufwickeln der Bahn (15) enthält.

5. Unterhaltungselektronischer Apparat nach Anspruch 4, **dadurch gekennzeichnet, dass** die Aufwickelanordnung (14) durch eine Arretiervorrichtung (42) in abgewickeltem und/oder aufgewickeltem Zustand der Bahn (15) arretierbar ist.

6. Unterhaltungselektronischer Apparat nach einem der Ansprüche 4 oder 5, **dadurch gekennzeichnet, dass** die Aufwickelanordnung (14) eine Rückstellvorrichtung (13) zum selbsttätigen Aufwickeln der Bahn (15) enthält.

7. Unterhaltungselektronischer Apparat nach einem der Ansprüche 2 bis 6, **dadurch gekennzeichnet, dass** der Schalter (32) zumindest eine an der Aufwickelanordnung (14) angeordnete elektrische Kontaktfläche (33) und einen mit dieser zusammenwirkenden elektrischen Kontakt (34) enthält, wobei die mindestens eine Kontaktfläche (33) von dem Kontakt (34) durch die Bahn (15) elektrisch isoliert wird, wenn diese zumindest teilweise aufgewickelt ist.

8. Unterhaltungselektronischer Apparat nach einem der Ansprüche 3 bis 7, **dadurch gekennzeichnet, dass** an der Bahn (15) eine Spannleiste (56) angeordnet ist, die die Bahn (15) entlang zumindest einer Richtung aufspannt.

9. Unterhaltungselektronischer Apparat nach Anspruch 8, **dadurch gekennzeichnet, dass** zumindest ein Abschnitt der Spannleiste (56) einen Handgriff bildet.

10. Unterhaltungselektronischer Apparat nach Anspruch 8 oder 9, **dadurch gekennzeichnet, dass** an der Spannleiste (56) ein Anschlag angeordnet ist, der sich bei aufgewickelter Bahn (15) am Gehäuse (17) des unterhaltungselektronischen Apparates (10) abstützt.

11. Unterhaltungselektronischer Apparat nach einem der Ansprüche 4 bis 10, **dadurch gekennzeichnet, dass** im Innern der Aufwickelanordnung (14) eine elektrische Stromversorgungseinrichtung (28) für den unterhaltungselektronischen Apparat (10) angeordnet ist.

12. Unterhaltungselektronischer Apparat nach einem der vorhergehenden Ansprüche, **dadurch gekennzeichnet, dass** er ein im Wesentlichen zylindrisches Gehäuse aufweist und dass das Zugelement (12) den Gehäusemantel durchgreift.

13. Unterhaltungselektronischer Apparat nach einem der vorhergehenden Ansprüche, **dadurch gekennzeichnet, dass** die Betätigungsanordnung (11) zumindest einen elektrischen Generator enthält, der durch das Ausziehen und/oder das Einziehen des Zugelementes (12) betätigt wird, wobei der Generator elektrische Energie für den unterhaltungselektronischen Apparat (10) erzeugt.

14. Elektrische Betätigungsanordnung (11) zum elektrischen Betätigen eines unterhaltungselektronischen Apparates (10), insbesondere eines Radio-Empfängers, durch eine Bedienperson, **dadurch gekennzeichnet, dass** die Betätigungsanordnung (11) ein aus dem Apparat (10) ausziehbares und in den Apparat (10) einziehbares Zugelement (12) enthält, wobei der unterhaltungselektronische Apparat (10) beim Ausziehen des Zugelementes (12) und/oder beim Einziehen des Zugelementes (12) betätigbar ist.
